# EUROPEAN PATENT SPECIFICATION

(11) **EP 2 359 196 B1**
(45) Date of publication and mention of the grant of the patent: **27.01.2016**
(21) Application number: 09744436.8
(22) Date of filing: 22.10.2009
(51) Int. Cl.: H01B 13/34, G03H 1/00, G03H 1/18, G03H 1/02, G03H 1/26

(54) **Security device, method and article**
Sicherheitseinrichtung, Verfahren und Artikel
Dispositif, procédé et article de sécurité

(30) Priority: 22.10.2008 GB 0819317
(43) Date of publication of application: 24.08.2011
(73) Proprietor: Drinkwater, Kenneth John, Hampshire GU51 3EY (GB)
(72) Inventor: Drinkwater, Kenneth John, Hampshire GU51 3EY (GB)
(74) Representative: Yeadon IP Limited
(86) International application number: PCT/GB2009/051428
(87) International publication number: WO 2010/046708

(56) References cited:
- WO-A2-2006/108607
- WO-A2-2008/029175
- US-A- 6 068 691

## Description

### Introduction

Holographic and diffractive devices are established as useful anti counterfeit and authentication devices and established in use in a wide range of applications. This is because the diffractive image features they contain such as colour shifts, movement and depth effects and image switches cannot be copied or created using printing technology so providing useful security features.

For example in security printing holographic labels and hot stamping foils, stripes are applied to a wide range of papers as used in security documents such as passports, tax stamps and banknotes. Of course this securitization process involves both the additional cost of the diffractive element and the additional cost of the application process.

There is also a class of diffractive security devices integrated within the paper making process itself such as into the thread or window thread within a security or banknote paper where a thread carrying a holographic or diffractive image is inserted within the paper at the paper making stage.

Whilst the thread making process is good for relatively high value papers such as banknotes there is still a need for a cost effective generalised method of incorporating diffractive or holographic security devices into papers at a cost level and efficiency capable of securitising a wider ranges of more cost sensitive security applications and potentially also capable of creating new distinctive visual diffractive paper security features.

Secure micro dot technology has been around for some time without diffractive features as a bespoke encoded verifiable particle (e.g. Data dot).

Also known is the use of encoded holographic micro dots consisting of metal platelets which have occasionally been used to apply additional security elements to articles such as high value consumer goods (car marking for example), security papers and plastic cards consisting of a small encoded micro-particle carrying a holographic image visible under a microscope and typically some sort of static code. However, such items are slow and laborious to manufacture essentially by hand in a batch process and therefore prohibitively costly in mass market applications as well as having technological disadvantages.

One of these previous metal holographic microdot items consists of a thin metal disc, typically nickel, produced by an electroplating growth process from a holographic master plate which has been selectively masked with,photo resist and etched to form and encode the finished dots typically with a pattern visible as a shaped hole in transmission. These techniques produce thin (c 10-25um) typically nickel holographic micro particles, typically 0.1 mm to 0.7mm size and planar containing a holographic image on one side , a matt finish on the other side as detailed in WO2005/078530 with an aperture carrying the encoded information picked up from the masking process during electroplating growth of the dot. The same effect can be similarly obtained using a masking and chemical etching process to remove material from a thin nickel shim to encode it through a mask as described in WO 2009/049652 A2 which suffers similar limitations in utility. The advantage of the small scale manufacturing process involved in these processes is that individual batches made off individual plates and masks can carry individual batch numbers, the disadvantage is that the dot manufacture is slow and expensive and so these micro dots tend to be used for high end individual tagging applications but have limited application in other potential areas of application such as to security documents.

WO2008/029175, WO2006/108607 and US6,068,691 each discloses methods for forming holographic platelets for security purposes.

These metal diffractive micro dots also have a number of other disadvantages in other potential applications...
- for example if sprayed or coated onto paper only half of the dots will land the correct way up to see the holographic image under authentication and the rest will simply appear as a dull matt finish which limits utility.
- The dots are uncoated nickel or metal and f sprayed or coated onto papers as a paper security device the dots have no special affinity for the paper so can tend to be poorly bound into the paper and can become dislodged during paper flexing in use or in printing processing for example thereby damaging printing presses or shedding the security feature over the life of a document.
- The use of nickel is a well known health hazard that can lead to an unfavourable allergic skin sensitisation with a small proportion of the population and so causes a health hazard both to users of the finished security papers and especially manufacturing staff.
- The process is a batch plating process and does not scale to lower unit cost larger applications.

The use of metal dots as security items is also known from WOP2008/029175 which refers to the use of encoded metal micro particles carrying a surface relief diffractive structure which can be authenticated by inspection with a magnifier and visual authentication. Again herein one of the disadvantage of the metal dots is that the image is only single sided and a further disadvantage is that there is no natural bonding into paper fibres making the security device essentially half wasted as only half the dots at any time can be authenticated and also making paper with such dots applied (generally by spraying or coating) prone to shedding such dots during manufacturing processes (e.g. so damaging printing presses and plates) or during usage.

It is also know to produce complex holographic or diffractive security originations using electron beam lithography, high resolution optical lithography or classical holography. It is also know to reproduce such diffractive structures by thermal embossing or UV casting embossing.

### Description

### - General ....

In one aspect of the invention there is provided a security device as recited in appended claim 1.

This invention refers to a new class of holographic or diffractive or interference film plastic encoded diffractive micro-particles designed as a high security covert authentication articles for application to a wide range of security papers by various methods. In general these new holographic plastic micro-particles are distinguished by carrying a diffractive image authenticable under microscopic assisted magnification (e.g. x 60, x 100) carrying both defined optical diffractive effects such as images switches, movement effect and colour shifts plus even smaller microscopic features such as micro print (few micron size text) or nano print (few tenths of micron text). They are also distinguished by carrying a surface relief profile formed in a plastic film which carries a metal reflective layer to provide reflectance to visualise the diffractive replay.

The dot can also incorporate various other functional and additional diffractive structures and layers.

The advantages from these new methods and structures detailed herein include ...
- laminate of structure to give holographic micro-taggant with right reading image viewable from both sides.
- Lamination to provide increased chemical , temperature and environmental resistance by protecting surface relief and metal reflectors.
- Incorporation of one or more heat seal coat9ing to activate and bind holographic micro-particle permanently into structure of substrate - particularly in security paper applications where the heatseal activates in drying and seals particle into paper structure.
- The potential for patterning effects makes room for both a covert microscopic feature combined with a bulk application to provide an unusual new visual security feature.

It is also possible using this plastic diffractive micro-dot system to integrate optical interference effects within the same micro dots or dot application with diffractive effects and also covert optical effects such as infra red up converters and UV features.

By the term polymer and plastic we mean a naturally occurring or synthetic compound of high molecular weight consisting of a very large number of repeated links of simple molecules or monomers. The plastics we refer to are a subset of polymers and are synthetic man made polymers usually supplied as films or coatings - typically we anticipate structure based on polyethylene terphane film (PET) optionally with an embossable coating and an additional reflector layer coated on the emboss surface relief: Numerous other polymers are possible in this application such as cellulous acetates, polypropylene, and ultra violet light cross linked polymers that can be coated on a surface relief as a liquid and then cross linked with UV light to form the polymer coating on the film which conforms to the surface relief profile.

### - Advantages / applications...

The new class of holographic micro particles have several features that are novel to allow technical improvements over previous products and unit production cost improvements to enable the application of holographic micro-taggant on a large cost effective industrial scale to a wide range of security documents using methods such as spray or roller coating application directly into the papermaking process.

In addition this patent application reveals some novel aspects of the new holographic micro dots that offer distinct advantages over previous forms in terms of truly bi-directional reading and enhanced adhesion and some new methods of patterned application that will distribute these microdots in unusual and novel patterns to form a new class of optically variable micro optic device suitable for usage in high volume security papers and other applications.

For example the use of reel to reel processing and the application of lamination techniques and adhesion promoting coatings allows a high volume lower unit cost product to be made than using previous techniques with much better bonding to the typically paper substrate and better lifetime allowing 2 potential applications amongst others ...
- into paper as a low cost covert security feature where a low density of dots for hidden authentication well bonded into the paper fibre and at a cost level suitable for bulk securitisation.
- Into paper at a much higher localised number density for a more visual security feature in potentially shaped or striped application areas (for example by spraying through a series of moving apertures) to provide a higher intensity more obvious public recognition security device as an alternative for example to holographic stripes, foils and threads to access a lower cost bulk market by applying this new security feature at the papermaking stage.
- The use of the patterning technique suggested here and the adhesion promoting techniques suggested here (heal seal coating on the dots to bond into the paper fibres) makes this a viable option for security papers such as ID documents, passports, banknotes, certificates, ballot papers and other security papers and documents.
- One advantage of this invention is that both sides of the dot replay an diffractive image which in one embodiment can be made identical from both directions providing a much more easily authenticated feature than previous systems.
- Another advantage of this invention is that the use of a heat activated adhesive coated onto the dots ensure that when the paper is heated to be dried drying the paper making process the heat seal adhesive is activated and the dots bond very firmly and integrally into the paper fibre structure to give the document a long lifetime and stable printing performance.

### - Features ... diffractive, interference ...

The new class of holographic micro particles have several features that are novel to allow technical improvements over previous products and unit cost reductions to enable the application of holographic micro-taggants on a large cost effective industrial scale to a wide range of security documents using methods such as spray or coating application directly into the papermaking process.

In addition this patent application reveals some novel aspects of the new holographic micro particles that offer distinct advantages over previous forms and some new methods of patterned application that will distribute these microdots in unusual and novel patterns to form a new class of optically variable micro optic device suitable for usage in high volume security papers and other applications.

These new class of holographic micro particles provide the ability to add to volume high security documents a high security holographic taggant element at a cost effective rate.

The new holographic micro particles are plastic, typically PET, but other plastics or UV cured surface relief emboss structures can be used, with a holographic or diffractive image embossed into them to provide diffractive effects and verifiable image effects (e.g. image switch , colour shift ,etc) under microscopic examination. Advantageous materials would be for example PET film (polyethylene terphane film) direct embossed under high temperature and pressure to provide a heat stable image or more standard embossed lamination films with high temperature resistant lacquers or back coated with such as detailed below.

In an alterative embodiment these dots could image instead of using surface relief diffractive structures, for optically variable structures and effects, alternative optically variable structures and effects instead based on optical interference effects to produce the characteristic for example dielectric multi layers of accurately controlled layers of different thickness or two metal layers, a partial and a full reflector with an accurately controlled spacer layer. These films give characteristic colour shifts on tilting (e.g. red to green , red to blue and are hard to counterfeit). Micro-optical effects using structures of a scale size of a few microns are also feasible.

So it should be understood that this patent and concept refers equally to both plastic based micro dots carrying diffractive structures, typically surface relief and metallised, though these could also include the class of volume holograms made of dichromated gelatin, photopolymers or the like, and plastic based interference effect films giving a colour shift.

Advantageous holographic microdots and interference effect micro dots can be mixed within the same application to give a multiple security optical effect consisting of both diffractive and interference effects. It would also be possible to create multiple technology micro dots by laminating together a holographic laminate to provide a holographic or diffractive effect on one surface and an interference film on the other surface.

The surface relief microstructure on the new holographic dots are metallised to provide a reflective surface to visual the diffractive images using for example aluminium or more durable metals if chemical resistance is required such as for example chromium or other metals to provide a greater chemical resistance.

The micro dots can also carry stationary information within the structure incorporated into the diffractive holographic layer by origination, selective metallization or selective demetallisation in patterns (e.g. by chemical etching from / through a mask for example) or by laser ablation depending on the application requirement. For large or intermediate run lengths the originations themselves can be encoded or the encoding date etched into each copy shim via a mask before embossing.

To make the dots appearance more subtle a partial low density aluminium metallization can be used for example say an optical density of 0.4 to 0.6 which is sufficient to render the dots transparent and non visible but to have them visualised using say fluorescing coatings to locate them.

In most other applications more normal visual aluminium metallised layers would be used of optical density 1.5 to 2. We also envisage using alternative metals for example for different colour effects and additional chemical resistance for example chromium and copper.

These dots unlike the metal electroplated dots of earlier will replay a holographic / diffractive image from both viewing directions although the image from one viewing direction will be mirror reversed.

### - Bi-directional reading holographic micro dots and enhanced chemical and heat resistance ...

A particular aspect of this invention that improves over previous work is to create holographic microdots that visualise exactly the same holographic image when viewed from either planar side. This can be achieved by taking two embossed and metallised holographic laminate sheets, metallising both to form holographic images and then using a laminating adhesive to laminate both sheets together to form one sheet. This laminated sheet would then be mechanically or laser cut to form the new Bi-directional holographic microdots designed to visualise a right reading security image whichever planar face the dot drop onto when applied to the substrate to be secured such as a security paper or foil or article. This is an advantage over all other systems and means for example that all the dots on a paper or article can be used for authentication as opposed to 50% if metal dost were used as previously, giving an efficiency increase of 100% over previous systems, for example using metal dots, and a halving of the number of micro dots 'strictly' required to verify security.

So these bidirectional laminated holographic micro-dots produce diffractive images when viewed from both directions and which guarantee that on every dot viewed each image is correctly orientated so is independent of which planar side is up when the dot positions itself within the paper web.

There are a number of subsidiary advantages that arise naturally out of this more effective configuration.

In one aspect the laminating adhesive can preferably be chosen to be of a cross-linking chemically resistant form (e.g. a 2 pack catalysed system) that will withstand heat attack (steam) and common aqueous based chemicals - this will protect the aluminium of the holographic film from attack and will have a melting point far above that of the holographic emboss lacquer acting as a support. This system will provide additional chemical , water and heat resistance to protect the micro dot against the chemicals in the both the paper making process and paper wetting or chemical attack during usage to ensure a good lifetime for the micro dot.

Note that increased chemical resistance can also be obtained for a single sided laminate by coating with a suitable chemically resistive layer although significantly superior qualities will be obtained from a laminated system as the edges of the dots exposed to chemical attack are far reduced.

This increase potential for chemical and heat resistance is also useful for micro dot applications in other more rugged environments such as car body authentication where the exposure to heat and temperatures can be far more extreme than with security papers or foils or plastic cards.

### - Enhanced adhesion to substrates - Holographic plastic micro dots with heat seal coating applied ideally each side to obtain enhanced heat seal adhesion to paper - the microdots are coated with heat seal adhesive both sides to be activated during paper drying to irreversibly bond micro dots into paper fibre ...

Another particularly useful aspect of this invention which overcomes limitations of previous work is the use of a heat seal coating on one and preferably both sides of the holographic micro dot to ensure a good bond to the paper fibres as the heat-seal adhesives melts during the paper drying process and bond to the paper fibres to lock the micro taggant firmly into the body of paper after the micro dot has been sprayed or otherwise applied into the paper. This aspect applies to both single laminate dots and bi-directional readable dual laminate dots.

In previous systems the micro dots of previous types have had no means to be anchored to the paper fibres after application by spraying or coating for example and have therefore tended to be poorly bonded into the body of the paper and shed out of the paper by becoming loosened dislodged during flexure during usage, ageing and during post printing where it can cause damage to printing rollers and machines making usage difficult. This can be a serious disadvantage for the widespread application of previous systems even if their high cost was not an issue.

In this new system the holographic micro dot has on one or ideally both planar faces of the disc shaped holographic micro particle a coating of heat seal adhesive which is used to anchor the micro dot firmly and permanently into the paper fibre structure, for example, during manufacture to provide a much more durable system than previously. So for example a useful thickness of adhesive is a few microns typically 3-20 um (or 4-20 gsm coat weight typically, optimally 7-10 gsm) of a heat activated adhesive chosen to be dry and stable during processing and storage but chosen to have an activation temperature a little above the steam point of 100 degrees Celsius so that at the drying temperatures employed on a paper line where steam can sometimes be superheated or the paper is taken just above the steam point to dry it so that the adhesive softens and melts to flow into the paper fibres and then hardens to bind the micro dot very firmly into the body of the paper.

Hence that the micro dot becomes integral with the paper fibres anchored by the activated and set heat seal adhesive, as a bonded in part of the paper fibre structure - as opposed to a uncoated un-bonded dot simply held in between paper fibres as previously the case with metal dots. This hot melt mechanism is novel over other systems and enables the new micro dots to become essentially an integral part of the paper structure that cannot be removed without destruction of the paper itself which marks a significant advancement over previous non bonded structures.

In this new holographic micro dot system the plastic dots are manufactured and coated on a reel to reel process in rolls using embossing, metallising and coating machinery. The holographic or diffractive security surface relief is embossed into a film or coated film from an embossing shim made from a master origination. This embossed surface relief is then metallised typically with aluminium although other alternatives are possible. To incorporate the heat seal coating the reel of holographic laminate is the passed through a coating system, typically gravure, meier bar, reverse gravure or dip coating to apply a heat-seal coating to one side of the laminate. This can optionally and advantageously be repeated to coat both sides of the holographic laminate with a heat-seal coating. The reel of material is the cut into suitable shaped micro dots by mechanical or laser cutting means typically. The use of reel to reel processing gives the ability to up scale processes easily to meet high volume applications and to produce large volumes of diffractive security micro dots significantly more efficiently and economically than by previous techniques.

A particular additional advantage of the system envisaged here is that the heat seal systems chosen are chosen to be safe for human handling - meeting FDA regulations for food contact, such that as the other plastic components are food safe these plastic holographic microdots incorporated within paper fibres are guaranteed to be safe for intensive human handling in manufacture and document circulation (in contrast to previous nickel dost which carry an inherent health and sensitisation allergic reaction risk in manufacturing handling and when circulating in paper).

### - Protective coating for enhanced heat and chemical resistance on single holographic laminate microdots ....

Note that for single laminate dots a protective coating can be added to the exposed surface relief side before heat seal coating to provide enhanced protection against moisture and chemical attack and enhanced heat resistance for the surface relief holographic surface and metallised surface.

### - Addition of material based optical and magnetic taggants as secondary security features ....

The heat-seals or other coatings or lamination adhesive materials can carry additional optical taggants suitable for visual authentication under assisted specialist lighting such as UV sources (e.g. red, green UV responses) and Infra red sources (e.g. green or red infra up converting phosphors to add secondary authentication features.

Magnetically active coating can also be applied in these coatings to allow magnetic detection of the micro-particles magnetically.

### - Physical sizes and shapes and cutting techniques...

These can vary depending upon the application and cutting technique.

A typical holographic microdot would be planar in shape i.e. wider than its thickness and a typical usual size range would fall in the range 0.1 mm (100 micron planar) to 0.90 mm (750 micron planar for a typical application. The planar thickness of there items would be between say 10um and 100um, typically 12-50um. For a few other applications the dots can have a wider range of sizes as detailed below.

The dot will be shaped - this can be an arbitrary shape but can preferentially be hexagonal, square, rectangular or circular for production convenience. The microdot would contain a microscopic diffractive image viewable under magnification for authentication with an array typically of laser verifiable optical features as known in the field and micron level features for covert authentication.

For a few other application the dots can have a wider range of sizes as detailed below.

We envisage occasional theses articles being used at other sizes .... Very small sized micro-particles down to 0.035 mm (35 micron discs typically 8um -40um thick) may be used for particular applications where sizing is important with the diffractive image features scales in size to suit e.g. in fluids where it is required to pass through small apertures or to remain in suspension for example when being used in printing inks for gravure or flexographic application, or as undetectable features mixed into items.

We also envisage occasional much large micro-particles say up to 1.5 mm in the largest planar dimension fore example when the micro particle are being patterned to give a public recognition security feature and need to be visible.

For a typical paper application the size can vary between 0.1 mm and 0.9 mm typically, with a centre point of utility at about 0.3-0.7 mm for most applications. The size depends essentially on how covert the application is required to be or whether a larger dot is required to make a more obviously visible and viewable public recognition feature.

It is envisaged that in the unusual case of a feature designed to be visually authenticated by the public that the dot size may go up to 1.5 mm depending on the quality of paper adhesion required and application process and level of public recognition and visibility as required as this would give a near visible holographic feature but manufactured during paper making.

It is envisaged that in standard applications where the diffractive feature is designed to be more covert and subtle and designed to be a diffractive feature authenticated by use of a simple optical microscope or magnifier the size is smaller - this is the more typical situation, typically around 0.25 to 0.5 mm to act as a covert holographic dot with a typical size of 0.35 - 0.4 mm and a maximum size of 0.7mm.

### Production methods ...

Production methods - It is envisaged that for most applications the dost will be produced reel to reel by reel to reel holographic embossing , metallization and coating for lamination and for heat-seal coatings.

The master diffractive images will be produced by holographic or diffractive origination as known in the art - e-beam lithography, optical lithography or laser interferometry. The will be recombined to master plates and copied using known techniques.

The material will be embossed reel to reels known in the art to provide volume manufacture. The material will be metallised as known in the art - usually with aluminium but possibly with other less usual metals such as chromium to impact greater chemical resistance.

For the bi-laminate structure two films holographic films will be laminated back to back with a suitable cross linking permanent lamination adhesive to provide a chemically and water resistance structure with a right reading diffractive image visible from each side.

The films will be coated potentially on both sides with a suitable heat seal adhesive for heat binding the materials into the paper web.

This forms base reel material suitable or microdot formation.

Encoding of the stationary batch code can be done at three stages depending on the batch volumes needed - for large batches within the origination , for smaller batches by etching the embossing shim with the code and then embossing (using a resist mask and chemical etch method for example). For very small batches the encoding can be done on sheets of finished laminates by photo-resist masking, exposing to a film mask, developing and then chemical etching away the non masked areas. This method for small batches is detailed elsewhere within this patent.

The finished small holographic micro-particles may be formed from the reel material in a number of ways. One method for volume is to form the microdots on a reel to reel cutting process using multiple phased mechanical cutter converting reels to micro-particles to provide a variation in shapes including octagons and hexagons, rectangles and squares to cover various applications and additional methods of personalising the dots.

It is envisaged also that laser cutting (e.g. using a carbon dioxide or Nd:Yag laser) can be used as an alternative which could for example provide personalised shaped dots with apertures cut into them and to provide additional personalisation for small volume applications.

Laser cutting is also useful to inscribe small numbers into the laminate and then performing cutting at the same time to provide small batch numbers of individually small batch encoded dots.

### - Stationary encoding....

The main authenticable security in the micro dot will be the diffractive image with it typical diffractive security features of image switches, colour changes, rotation and apparent motion effects etc.

Generally for volume reel to reel manufacture the micro dots can also carry stationary information which can be incorporated in the holographic origination or for a more flexible approach etched into an individual embossing shim used for a reel to provide a smaller batch capability.

Another approach suitable for reel to reel manufacture is to use selective metallisation or demetallisation to encode further information into the dots by leaving shaped metallic coating or by use of laser ablation to remove part of the metal surface.

An approach suitable for very low volumes of personalised numbers is to sheet off the reels material and then encoded for small volumes in a sheet or short elongated web from - for example by coating with a resist material, exposing to a mask, developing to remove areas of the resist where the encoding is required and then by chemically etching away the metal (in this case a simple alkali etch will suffice if the metallization is aluminium). If additional heat seal coatings are required these could then be added as a bench processing procedure before cutting typically by running a short reel into a mechanical cutter to provide a set of diffractive encoded microdots. An another alterative to this is to use a laser marking machine (typically Nd:Yag) to mark the material before mechanically cutting.

### - Diffractive microdot characteristics that this patent anticipates ....

- This work anticipates plastic micro dots and reel to reel manufacture, typically from PET or similar eg by direct embossing of PET of coated PET, UV cured emboss and lacquer, or use of much higher temperature lacquers such as Polycarbonates or other materials of high temperature and chemical durability,. Stationary text can be added on actual emboss shim to be used for any particular batch by chemical or laser etch for smaller batches.
- Thickness 12,16, 20, 35, 40 ,50 micron and planar size 0.2 to 0.8 mm typically range, typical would be 15 or 35-40um thickness (for single laminate / bi - laminate) and 0.4 mm size hexagonal for example.
- Two side holographic bi-laminated holographic microdot to ensure all dots read the correct orientation image whatever orientation.
- Addition of a heat seal coating on one side and preferably both planer faces of holographic microdot - to improve adhesion into paper fibre by heat activated binding using paper drying
- significant improvement over previous systems - dots sprayed via air jet or sprinkled into wet or damp paper web in paper making process at paper mill in line .... Heat seal coating designed to activate as paper dried and water evaporated off to melt and bind microdot to paper fibres very securely so that the micro dost become an integral part of the paper. Trigger temperature for heat seal softens at 100 degree C , drying temperature, flow point approx 130 degre C to prevent dots becoming dislodged during steaming. Preferably use a non water soluble heat seal adhesion such as a polyester resin or acrylic resin heat seal.
- Bi-laminate dot enables diffractive / holographic image always to be right reading on any dot examined, image designed to be examined and verified under microscope.
- If metallic pattern has been demetallised or etched then useful to use a coloured, black or tagged laminating adhesive to increase contrast on demetallised markings.
- Reflective layer typically aluminium but can be more durable metals such as chromium, copper or similar or can be high refractive index transparent material such as zinc sulphide or titanium dioxide to provide a transparent holographic reflector foe a more subtle effect or coloured effect from an underlying material in the coating.
- Adhesive for bi-laminate usually of cross-linking permanent nature (2 pack type typically) chosen to be solvent and water resistant and heat resistant when cross linked to give the micro dots boil resistance, water resistance and weak alkali / acid resistance to provide a lifetime enhancement for the feature on banknotes. This would typically be applied by a wet solvent based coating method in a coating system.
- Heat seal binder layer on surface of dots can have taggants added to the binder coating as an optional low costs additional feature. e.g. UV fluorescence, IR up converter which are typically anti-stokes phosphors that absorb IR laser wavelength , say 980nm , and emit at visible green or red. Potentially both dot surfaces could be coated in different colour up converters to add more security effect.
- It is also possible with a bi-laminate to provide different optical effects ion each surface - so for example a holographic or diffractive image on one surface to provide say a magnified image switch and an optical interference effect (based on a metal layer, an accurate spacer and a semi-reflector) on the other surface to provide a security feature displaying two optically variable technologies, diffractive and interference in one item or security feature for increase security against counterfeit.
- A dual technology system could also be created by layering upon the reverse of a conventional holographic laminate film several layer and spacers to provide a metallic optical interference film based on a holographic effect on one side and a diffractive based holographic effect from the other side.
- It is also possible using these techniques to produce micro patterned interference films in a novel way which can be combined into micro dots. So in the method holographic embossing would be used to provide micro text or other graphics formed as diffusing rough areas. This would then be covered by an aluminium total reflector, a controlled thickness interference film spacer and then a semi reflector such as a partial reflecting aluminium layer or more usually a chromium partial reflector partial transmitter. This would then provide a defined colour shift effect driven by the thickness of the spacer layer except in the areas where the colour shift structure was disrupted by the diffusing or optical micro structure which would appear dark. In this way a micro patterned interference film effect can be made suitable for microscopic examination. Two such films would be laminated together to give the correct interference effect from both sides of the film which would be cut into small dot particles to form the micro dots.
- It is also possible to use the interaction of diffractive and colour shift effects in a similar way to provide a basic colour shift pattern for example containing a holographic micro image still displaying a characteristic image switch, say upon rotation, the opposite movement to that of the colour shift effect which will appear upon tilting.

### Novel patterning possibilities for areas of holographic micro particles in paper and on foils ......

There are a number of potentially interesting effects that can be generated particular at the point of securitisation of a paper substrate by applying the dots within the paper mill in distinct ways.

Generally the dots will be dry sprayed or shaken onto the wet or damp paper web as the paper is formed and before or just at the start of the drying processes which can be done on hot rollers or by hot air.

The costs can also be roller coated (e.g. gravure, silk screen rotary printing / coating) onto the surface as a flood coating in a carrier liquid or deposited locally as a localised pattern. Small micro-sots sizes of around less than 100um are advantageous for printing to ensure the particles pass onto the surface.

The advantage of coating the planar surface of the dots with a heat seal adhesive designed to activate at the drying temperature of the paper web is that this adhesive melts during spraying of the paper and bonds very firmly the micro dots into the paper making them resilient to being dislodged under paper flexure or printing. This is a distinct advantage over previous systems that tens to shed dots.

Another alternative method to spraying in an air stream to apply the dots is to use a simpler mechanical mechanism.

Application through say a silk screen press (eg rotary screen) or a gravure roller can also be used with a carrier binding liquid to form an ink as printing is a useful method for localised patterning, for example.

In a typical application the dots are randomly and uniformly distributed across the paper film (possibly from a number of spray heads) to typically act as a uniformly distributed covert feature.

However, there are application where the covert feature is desired to be generally localised , and applications hat are now where it may be an advantage to create a new subtle visual security feature out of the shaped localisation of the dot cluster in some simple graphical shape.

So now that the dots can be firmly anchored into the paper for the life of the paper and are relatively much lower costs than previous dot systems, and of course are applied during paper making so which is the lowest cost place to do this, there is opened up the possibility of increasing the dot density and investigating patterning of the dots to form novel unique visual optically variable security features.

So we claim a new optical security feature made of shaped areas of holographic microdot deposition, namely we claim a methods of patterning dot deposition using a method of dot spraying or similar random projection of dots towards the wet paper web, particularly allied to a masking assembly of apertures, moving apertures an shaped apertures linked in with the regular uniform movement in one direction of the paper web to provide unusual and unique graphics and effects for higher densities of dot deposition as being a novel new security feature. In particular the distance of the aperture from both the spray head and the paper controls the rate of reduction of density at the edge of the graphic which can be a sharp definition if the mask is nears the paper and can be a very blurred gradual fall off if the mask is far away. These patterning possibilities can also be further modulated by switching the dot flow on and off (e.g. by air pressure variations in the spray nozzle or by a blocking aperture).

Another simple method to achieve this can be done entirely by spray head modulation linked into the paper web movement - foe example by modulating the air flow and this modulating both the density of dot output and spread of the stream of dots (which will be wider and higher pressure) - this can also be combined with complete cessations or a pulsing or modulation of the air pressure in a cyclic way to produce a subtle repetitive pattern effect.

This method therefore give a very flexible and simple method to combine a modulated width and density of dot spray with the linear movement of the paper web (this can be linked in via a speed sensor) to generate quite simply very characteristic graphical effects of a subtle nature consisting of random array of holographic effect dots in various indistinct and gradually changing shapes.

It can be seen that what is being created is a fairly large scale security feature consisting of a large scale pattern of dot application characterised by both a random distraction of the micro dots within it and a suitably diffuse border to make counterfeit difficult and to make the shape of the pattern very characteristic which makes it suitable for a new optical security feature.

It can be appreciated that a similar approach can be taken on applying the dots to security items such as plastic bases for ID cards and in for example PE film used for over-lamination.

This patterning effect therefore forms the basis of a possibility of using these holographic micro dots not just as an entirely covert feature but in a larger format and at greater densities using the micro dots applied in areas with a very specific and characteristic graphic effect to form a new class of optically variable security feature.

It is also useful if the dots are to be used a public recognition optically variable device to look at some means of aligning the orientation of the dots as they settle and lock into the paper to coordinate the replay directions of the micro holograms and diffractive structures. We claim a simple method of doing this by cutting the dots in micro shapes which are elongated (e.g. rectangles),and using a spray head with carefully sized holes such that short axes fit though but the long axes collide with the edge of the holes to create a more parallel aligned output. It is also helpful for this if the holes in the spray head or silk screen printing roller are slightly elongated into 'small tunnels'. Or ellipses for the roller The spray would then be aligned to run more parrallel to the paper rather than directly at it so lay down a more nearly parrallel set of rectangular microdots with their axes more closely aligned. The effect of this would be to coordinate on a large public recognition scale the optical effects of the various micro dots by coordinating their alignment. It can be observed that such a property could also be obtained by using a shaker effect deposition device with holes elongated in one direction to orientate the long axes of the dot in a similar way.

### Examples...

The holographic plastic PET micro-particles are designed as a high security-covert authentication method to enable the application of holographic micro-taggants on a large cost effective industrial scale to a wide range of security documents using methods such as spray application directly into the papermaking process.

These holographic micro particles provide the ability to add to volume high security documents a high security holographic taggant element at a cost effective rate.

The diffractive security image on the foil is of the highest possible security standard containing optically variable features such as rotation, apparent motions, image switches and depth effects. These effects are manufactured by highly sophisticated custom origination equipment base on sophisticated interferometric optical lithography and the quality and scope of these effects are not accessible with simpler types of optical imaging such as holography. Theses origination techniques also include covert techniques including a sophisticated range of micro , nano and machine verifiable features. This provides public recognition security and anti-counterfeit security. The images are designed to be viewed under microscope illumination where the range of image features can be authenticated.

The dot consists of a typically 24 - 36 um thickness micro disc and can be made to various sizes and shapes typically a 350um hexagon or rectangles or squares in a size range 150-500 micron diameter.

Under a a simple hand held magnifying microscope for field authentication of x60 x 100 power the dots replays a holographic / diffractive security image containing various secure holographic effects for authentication such as image switch, movements, kinetics, expansions plus a range of micro-writing and covert holographic laser viewable images for example.

Some general visual diffractive effect will be visible to an observer but no detail on the image will be resolved.

The dots can also contain stationary etched text effects visible under microscope or eyeglass.

The dots can also contain nanometer scale text effects suitable for forensic authentication under very high power optical microscope magnification at c x 1000 times suitable equipped forensic laboratories.

Additional optical taggant technology can be incorporated into the dot using surface coating technology. Typically these would be Infra Red up converting phosphor taggants using rare earth materials that absorb IR laser light a re-emit a visible colour. Typical colours available are IR to green and IR to red. So foe example if the dots are coated in green replay taggant one side and red replay taggant on the other side. UV features are also possible. This provides another line of security and another rapid field verification method for a suitably tagged paper document.

To increase binding into paper appropriate heat seal binder coatings can be added using coating technology to the planar surface of the dots.

The materials used are no toxic and in particular the heat seal system used is rated as safe for even direct food contact (approved to FDA standards FDA 175-105 and FDA 176-170) to ensure the system poses no threat for long term public usage.

Application - It is anticipated the dots can be air jet sprayed into / over the surface of the paper as it is run in the mill, allowed to float and settle into the paper after landing in the wet paper, settling in to just beneath the surface and then having the heat seal binders triggered in the oven or on the drying rollers as the paper is dried. Alternatively roller based printing and coating methods can be used.

The holographic dots would be applied before the calendaring rolls in the paper mill which will also pres the holographic taggant dots into the paper surface and bind it,

Possible holographic micro-dot disc constructions are ..
1. **Holographic Single layer** -typically at 24um planar holographic plus disc of a hexagonal shape 350um across, Consists of PET, holographic layer, aluminium or ther metal coating to provide reflectance plus one or two outer binder / sealing layer to provide protection for the metallization and paper binding. Optional security taggant e.g. IR up converters as desired. Both sides of the disc will have a holographic replay but one will be mirror imaged, the use of two IR taggant colours can easily distinguish which discs are orientated correctly for authentication to save time.
2. **Holographic BI -laminate -** typically a 32-26 micron planar holographic plus disc of a hexagional shape 350um across, Consists of two PET, holographic layers laminated in the centre with an irreversible cross linked adhesive to maximise protection of the holographic layers against environmental attack near banknote durability standards, holographic layers metallsied with aluminium or the metal coating to provide reflectance. These dots will always read a **right reading image** for any orientation of drop and every dot on the paper will be right reading.

The dots will have added as required one or two heat seal outer binder / sealing layer to provide protection for the metallization and to improve paper binding. The adhesives are chosen with a Tg of 125 degree C and bind at 100 degree Celsius to give an effective bind to paper fibre.

Optional security taggants e.g. IR up converters can be added as desired. Both sides of the disc will have a holographic replay right reading. , The use of two IR taggant colours can easily distinguish which discs are orientated correctly for authentication to save time. Again the general construction follows that used for holographic threads in security paper to protect against the papermaking process and in field usage.

Typically the dots will be supplied as micro dots with approximately 140-180 million dots per kg depending on the construction used.

One advantage of the product is that the materials used are no toxic and in particular the heat seal system used is rated as safe for direct food contact (approved to FDA standards FDA 175-105 and FDA 176-170) to ensure the system poses no threat for long term public usage or application usage.

Other substrates in addition to paper are envisaged, for example plastic reels or sheets (e.g. ID cards) and transfer foil bases can be used a suitable carriers for the micro-particles to which similar production methodologies will pertain.

### Figures ...

Several figures are attached demonstrating aspects of this invention as follows ......

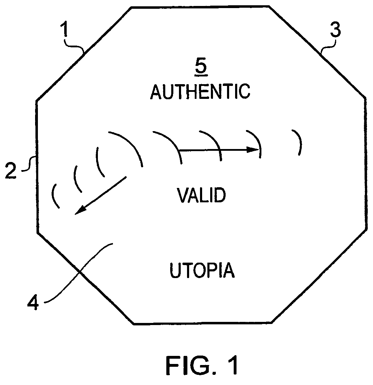

Figure 1 shows (1) a magnified view of typical plastic holographic plastic micro particle according o this invention. The size and shape (2 and 3) can be hexagonal, planer, size, typical dimensions planar of dimension 350micron (range 35 micron to 1500micron) thickness 35 micron typical (range 10-75 um) carrying microscopic diffractive / holographic security image (4) and stationary details (5) so providing movement, image switch (4) etc.

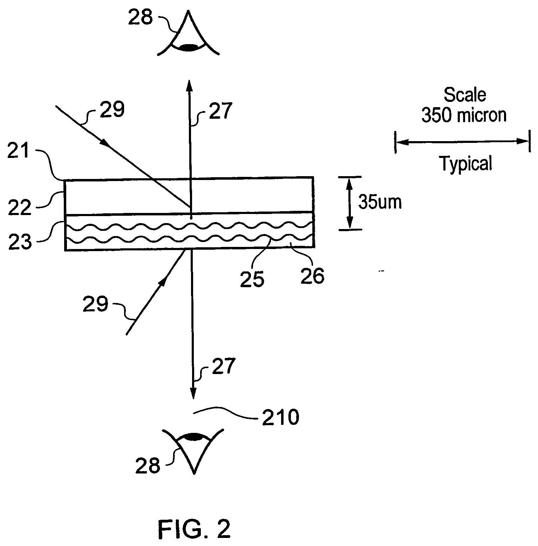

Figure 2 shows (21) a cross section of typical holographic micro-particle according to one aspect of this invention showing carrier (22), embossed surface relief layer with security surface relief micro-embossing (23), metal reflector layer (26) which can be opaque metal or transparent HRI , etc, showing hologram visible from both sides 27, 27) to observers (28,28) under illumination (29,29), with one holographic image side displaying a reversed image(210) to the observer(29). Also shows additional coating layer to protect surface relief from chemical attack in wet paper (25). So the micro-particle (21) replays a holographic image for authentication from both sides for an observer, which is an advantage over some previous systems (for example electroplated dots) although one image view is a mirror reversal (210) of the correct right reading image.

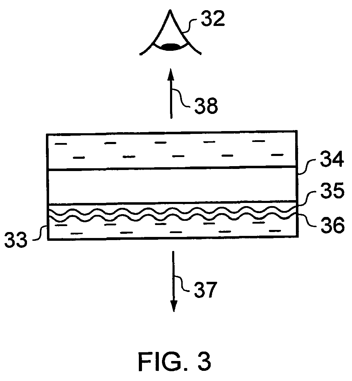

Figure 3 : This figure shows a cross section of typical holographic micro-particle according to another aspect of this invention (31), where the system shown in Figure 2 has been improved by the addition of a heat activated binder adhesive (33)to one or most preferably both surfaces of the micro particle (consisting of a PET or similar carrier, a surface relief diffractive coating and a reflective layer 34,35,36) for enhanced paper fibre adhesion or substrate adhesion during the paper making process. The figure showing carrier (34), embossed surface relief layer, metal reflector layer (can be opaque metal or transparent HRI etc) showing hologram see from both sides (37,38), one side right reading (37) and one side image mirror reversed reading (38)and two coatings of heat seal adhesives on each face (33). Also an additional coating layer to protect surface relief from chemical attack in wet paper van be added onto the reflector layer (26). The heat activated heatseal adhesive (33) is designed to activate under heat and bond micro-fibre particle firmly and irreversibly into paper fibre most usefully after the dots have been applied to the wet paper web as the paper is formed in a paper mill, although this can also be used if the dots are post applied to a document to secure it and then heat activated on under a hot silicon roller for example - e.g. simple document authentication in the field,

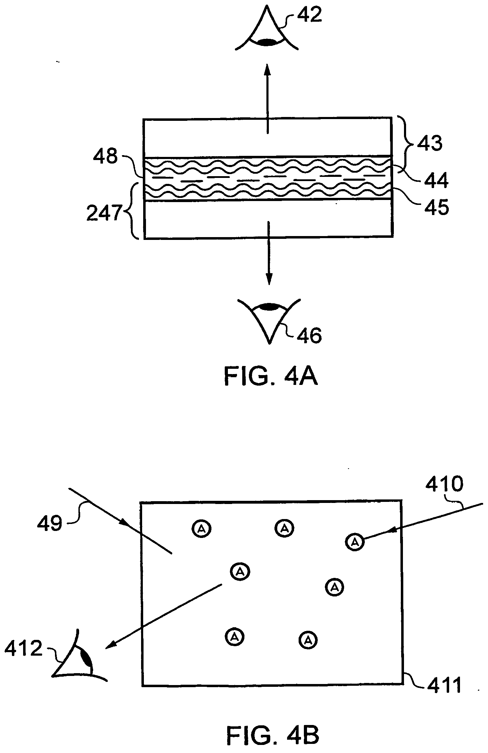

Figure 4 : Cross section of typical holographic micro particle according to another aspect of the invention (42) showing a typical holographic bi-laminate micro-particle where the bi-laminate always presents a right reading holographic image whatever orientation of the micro-particle is viewed according to which surface of the planar micro-particle is upper most on the substrate (411). In Figure 4A a holographic bi laminate is used (43,44,45,47,48) to give an particle that produces a correctly reading holographic image from both sides of view (42, 46). Advantageously a lamination adhesive (48) is used that is permanent and cross linked in another aspect to provide a chemical and heat protection layer for the holographic metallic reflector and embossed surfaces to give better environmental stability. The particle consists of two holographic laminates (47) sandwiched together consisting of a carrier layers (43), surface relief and reflector layers (44, 45) and a lamination permanent bond layer (47).
Figure 4B shows the application of these dots to paper or other secure substrates (411) where every dot although the orientation is random each dot displays the same right reading diffractive image 9410) to an observer (412) for ease of verification under illumination (49).

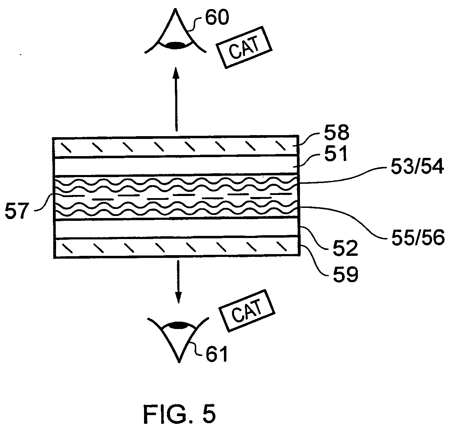

Figure 5 : Shows improved version of right reading bi-laminate holographic micro particle with heat seal coating applied on each surface of laminate to improve binding into paper fibres during heating to enable key into paper during drying process to seal micro - particles into paper fibres during paper drying process. There are 2 PET carriers (51 and 52) in the bi-laminate construction, 2 surface relief and metallised holographic / diffractive layers (55, 56), a permanent lamination adhesive layer preferably cross linked for chemical and temperature resistance for the structure (57), a heat seal coating (58) which activates under drying of paper to for improved binding of micro particle into substrate, and a second heat seal on the opposite face also for improved bonding (59). In this case both holographic images give right reading images (60 and 61) to an observer to simplify authentication in use.

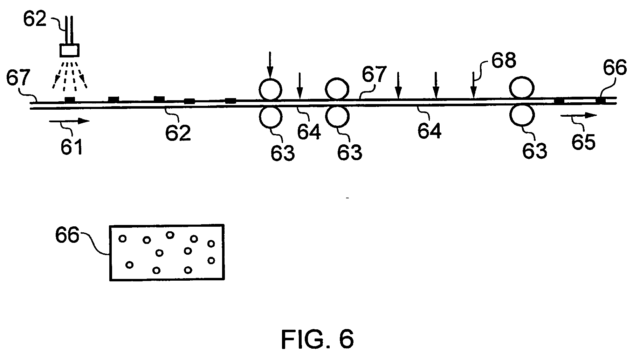

Figure 6 : Shows typical application in a paper mill (60) - Typical application in paper-mill of dots sprinkled or sprayed (62) or otherwise applied into wet paper pulp (67) then rolled (63,64)or allowed to settled in into paper (62) and then the heat activated adhesive is activated as paper is dried by hot air(68) or by heated rollers (63) or both (63, 68) to activate adhesive and lock holographic dots within paper fibre (66,65) as part of paper structure (66). The wet paper web (67) travels under spray or sprinkler system for dots (62) which then settle into wet paper (62) before hitting calendaring rollers (63,and dryers). As an alternative system to sprinkling or spraying the first stage of rollers (63) can be used to wet coat the dots into the paper surface in a dilute solution. The paper is then dried in hot air (68) and / or with several heated rollers (63) to leave the micro-particles sunken and embedded into the paper surface (65,66) as paper of the paper structure and locked into place with a heat seal adhesive they have been coated with. At the end (66) random dots re sealed and locked into paper and the bi-laminate structure ensures each dot replays the same holographic image for verification regardless of which way up the dots have landed onto the paper surface.

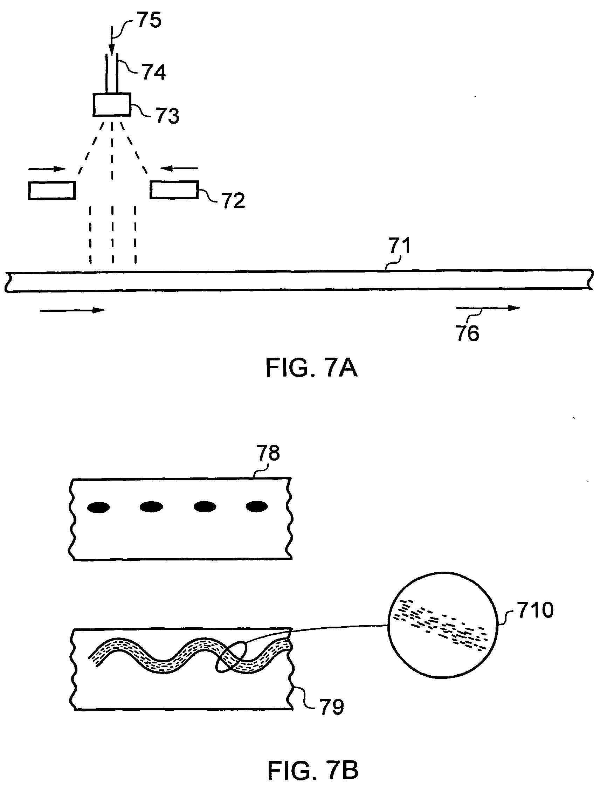

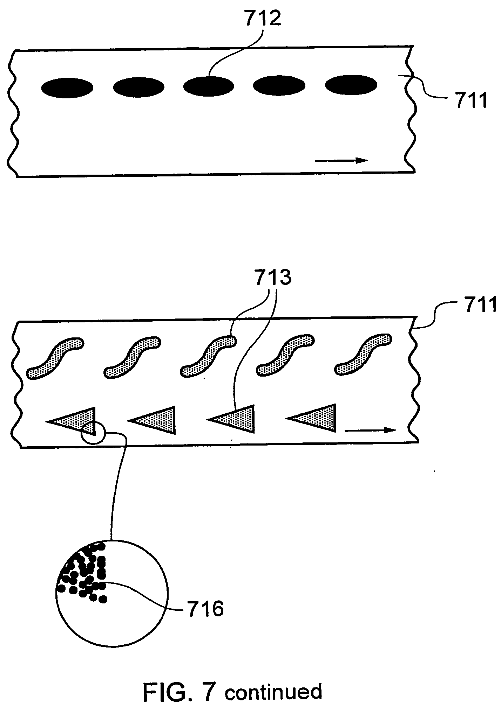

Figures 7A and 7B - Figure 7A shows the potential of patterning of dots (75) by using moving apertures (72) at or just after the spray nozzle or sprinkling stage (73) to modulate the dot application flow (75) to provide a patterned effect of the dot distribution landing on the wet paper web (71) whose movement provides another axis of movement 976) allowing the aperture to only need to modulate on off (77, 712) or across the web in position(710, 713). It should be noted that an alternative way of achieving this we reveal here would be to use a patterned coating roller applying dot patterns to the surface of the device - such as a patterned screen roller in a rotary or flat screen system applying the dots in a dilute solution of liquid carrier to the web.
Figure 7B shows various patterning possibilities by modulating flow or adjusting aperture size such as interrupted lines (77), varying linewidth (77), graphic shapes(710, 711, 712, 713,714, 175) and shapes using multiple apertures to give multiple graphical effects (713, 714, 715) each shape actually made up of a random pattern of microdots with characteristic diffused edges (716). This gives a higher density public recognition security device using modulated sprinkling or modulated spray rate application optionally plus a moving set of apertures to create simple characteristic shapes or multiple shapes of a characteristic type as shown.

The scope of the invention is defined by the appended claims.

## Claims

1. A security device comprising a planar holographic platelet (21) provided with an identification code, the platelet comprising a polymer material (22), the platelet having first and second opposed major faces each having a microstructure (23) arranged to generate an optically variable image providing the identification code under illumination, the image being optically variable as a function of an illumination angle or viewing angle, **characterised in that** the microstructures on each of the first and second major faces are arranged so that the optically variable images on each of the first and second major faces are right reading when viewed by an observer (28, 32, 42, 46) upon illumination from the respective viewing side.

2. A security device as in claim 1 wherein each optically variable image is one selected from amongst a diffractive image and a holographic image and wherein the microstructure (23) is one selected from amongst a diffractive surface relief structure metallised to provide reflectivity, a photopolymer or dichromated gelatine holographic or diffractive structure, a micro optic structure and an optical interference generating structure.

3. A security device as claimed in any preceding claim comprising two holographic laminates (43, 247) bonded together by means of a suitable permanent adhesive (48) to ensure that from each side of viewing the diffractive image remains right reading and correctly orientated to an observer (28, 32, 42, 46).

4. A security device as claimed in claim 3 wherein the adhesive (48) is chosen to be a cross-linking adhesive, the adhesive providing a protective coating thereby providing enhanced heat, water and chemical resistance to the device.

5. A security device as claimed in any preceding claim coated with a heat sealable adhesive on one or both faces, the adhesive being arranged to melt and bond under the application of heat thereby to bind the device permanently to a substrate, the substrate being paper.

6. A security device as claimed in any preceding claim comprising at least one of:
an optical taggant visible under infra red or ultra violet light; and
a magnetic taggant detectable by means of a magnetic field detector.

7. A security device as claimed in any preceding claim in the form of a substantially planar disc (21), wherein the device has a largest planar dimension in the range of from around 35 microns to around 1000 microns, a thickness of the device being less than 60% of the largest planar dimension.

8. A security device as claimed in any preceding claim wherein a surface relief of the device (21) is arranged to define the identification code visible to a viewer (28, 32, 42, 46) of the device (21), wherein the at least one indicium comprises an alphanumeric character and/or wherein the identification code corresponds to a batch code.

9. A security device as claimed in any preceding claim wherein the optically variable image visible on the first major face is different from the optically variable image visible on the second major face.

10. A security article (411) comprising a security device (21) as claimed in any preceding claim, wherein the article (411) comprises one selected from amongst:
a security paper, wherein the micro particles are applied to the security paper during the paper making process by a process of sprinkling, spraying or slurry coating to the wet paper web prior to drying; and
a plastic, a foil and an identity card made by applying the devices to security items such as plastic bases for ID cards or PE films of hot stamping foils used for over-lamination rather than security paper.

11. A security article (411) as claimed in claim 10 provided with a plurality of security devices (21), wherein the devices are provided to be of a sufficiently low number density to provide a covertly verifiable security feature.

12. A security article (411) as claimed in claim 11 wherein a plurality of devices (21) are applied to an area of the article thereby to provide an optical security feature visible to a user (28, 32, 42, 46), optionally to form a recognizable shape.

13. A method of forming a security article (411) as claimed in claim 11 or claim 12 comprising:
spraying from a source a plurality of security devices (21) as claimed in any one of claims 1 to 9 through at least one aperture towards a wet paper web;
moving at least one of the aperture or the web with respect to the source; and
on and off the source of devices thereby to create a pattern of devices on the web.

14. A method as claimed in claim 13 wherein the source comprises a spray head and wherein a distance of the aperture from both the spray head and the web controls the rate of reduction of density at the edge of a graphic formed on the web by the devices, such that a sharp definition is provided if the aperture is near the paper and a blurred, gradual fall off is provided if the aperture is far away, and wherein the method comprises switching the flow of devices on and off for example by air pressure variations in the spray nozzle or by a blocking aperture.

## Patentansprüche

1. Sicherheitseinrichtung, die ein mit einem Identifikationscode versehenes ebenflächiges holografisches Plättchen (21) umfasst, wobei das Plättchen ein Polymermaterial (22) umfasst, das Plättchen erste und zweite entgegengesetzte Hauptflächen aufweist, die jeweils eine Mikrostruktur (23)aufweisen, die eingerichtet ist, ein optisch variables Bild zu generieren, das unter Beleuchtung den Identifikationscode bereitstellt, wobei das Bild als eine Funktion eines Beleuchtungswinkels oder Betrachtungswinkels optisch variabel ist, **dadurch gekennzeichnet, dass** die Mikrostrukturen auf jeder der ersten und zweiten Hauptflächen so angeordnet sind, dass die optisch variablen Bilder auf jeder der ersten und zweiten Hauptflächen nach rechts lesend sind, wenn sie von einem Betrachter (28, 32, 42, 46) bei Beleuchtung von der jeweiligen Betrachtungsseite betrachtet werden.

2. Sicherheitseinrichtung nach Anspruch 1, wobei jedes optisch variable Bild eins ist, das mitten unter einem Beugungsbild und einem holografischen Bild selektiert wurde, und wobei die Mikrostruktur (23) eine ist, die mitten unter einer lichtbrechenden Oberflächenreliefstruktur selektiert wurde, die metallisiert ist, um Reflexionsvermögen, ein Fotopolymer oder eine dichromatisierte Gelatine holografischer oder lichtbrechender Struktur, eine mikrooptische Struktur und eine optische Störung generierende Struktur bereitzustellen.

3. Sicherheitseinrichtung wie in irgendeinem vorhergehenden Anspruch beansprucht, die zwei holografische Laminate (43, 247) umfasst, die mittels eines geeigneten permanenten Klebstoffes (48) miteinander verklebt sind, um sicherzustellen, dass von jeder Betrachtungsseite aus das Beugungsbild nach rechts lesend und für einen Betrachter (28, 32, 42, 46) korrekt orientiert bleibt.

4. Sicherheitseinrichtung wie in Anspruch 3 beansprucht, wobei der Klebstoff (48) ausgewählt wird ein quer vernetzender Klebstoff zu sein, wobei der Klebstoff eine Schutzbeschichtung bereitstellt und dadurch die Eim-ichtung mit verbesserter Wärme-, Wasser- und chemischer Beständigkeit versieht.

5. Sicherheitseinrichtung wie in irgendeinem vorhergehenden Anspruch beansprucht, die mit einem heißsiegelbarem Klebstoff auf einer oder beiden Flächen beschichtet ist, wobei der Klebstoff eingerichtet ist, unter der Anwendung von Wärme zu schmelzen und dadurch die Einrichtung permanent an ein Substrat zu binden, wobei das Substrat Papier ist.

6. Sicherheitseinrichtung wie in irgendeinem vorhergehenden Anspruch beansprucht, die wenigstens eins der Folgenden umfasst:
einen optischen Taggant, der unter infrarotem oder ultraviolettem Licht sichtbar ist; und
einen magnetischen Taggant, der mittels eines Magnetfelddetektors detektierbar ist.

7. Sicherheitseinrichtung wie in irgendeinem vorhergehenden Anspruch beansprucht in Form einer im Wesentlichen ebenflächigen Scheibe (21), wobei die Einrichtung eine größte ebenflächige Abmessung im Bereich von ca. 35 Mikron bis ca. 1000 Mikron aufweist, wobei eine Dicke der Einrichtung weniger als 60% der größten ebenflächigen Abmessung beträgt.

8. Sicherheitseinrichtung wie in irgendeinem vorhergehenden Anspruch beansprucht, wobei ein Oberflächenrelief der Einrichtung (21) eingerichtet ist, den Identifikationscode zu definieren, der einem Betrachter (28, 32, 42, 46) der Einrichtung (21) sichtbar ist, wobei das wenigstens eine Kennzeichen ein alphanumerisches Zeichen und/oder wobei der Identifikationscode einem Chargencode entspricht.

9. Sicherheitseinrichtung wie in irgendeinem der vorhergehenden Ansprüche beansprucht, wobei das optisch variable Bild auf der Fläche sichtbar ist.

10. Sicherheitsartikel (411), der eine Sicherheitseinrichtung (21) wie in irgendeinem vorhergehenden Anspruch beansprucht umfasst, wobei der Artikel (411) einen umfasst, der unter Folgenden selektiert wurde:
einem Sicherheitspapier, wobei die Mikroteilchen während des Papierherstellungsprozesses durch einen Prozess von Streuen, Sprühen oder Schlämmebeschichtung auf die nasse Papierbahn vor dem Trocknen aufgebracht werden; und
ein Kunststoff, eine Folie und eine Kennkarte, die durch Aufbringen der Einrichtungen auf Sicherheitsgegenstände hergestellt werden, wie beispielsweise Kunststoffgrundflächen für ID-Karten oder PE-Filme aus Heißprägefolien, die für Überlaminierung eher als Sicherheitspapier verwendet werden.

11. Sicherheitsartikel (411) wie in Anspruch 10 beansprucht, der mit einer Vielzahl von Sicherheitseinrichtungen (21) versehen ist, wobei die Einrichtungen einer genügend geringen Zahlendichte sein sollen, um ein heimlich verifizierbares Sicherheitsmerkmal bereitzustellen.

12. Sicherheitsartikel (411) wie in Anspruch 11 beansprucht, wobei die Vielzahl von Einrichtungen (21) auf einen Bereich des Artikels angewandt werden, um dadurch ein optisches Sicherheitsmerkmal bereitzustellen, das für einen Nutzer (28, 32, 42, 46) sichtbar ist, optional, um eine erkennbare Form zu bilden.

13. Verfahren zum Bilden eines Sicherheitsartikels (411) wie in Anspruch 11 oder Anspruch 12 beansprucht, umfassend:
Sprühen aus einer Quelle einer Vielzahl von Sicherheitseinrichtungen (21), wie in irgendeinem der Ansprüche 1 bis 9 beansprucht, durch wenigstens eine Öffnung in Richtung einer nassen Papierbahn;
Bewegen wenigstens der Öffnung oder der Bahn in Bezug auf die Quelle; und auf die und weg von der Quelle von Einrichtungen, um dadurch ein Muster von Einrichtungen auf der Bahn zu schaffen.

14. Verfahren wie in Anspruch 13 beansprucht, wobei die Quelle einen Sprühkopf umfasst und, wobei ein Abstand der Öffnung sowohl vom Sprühkopf als auch der Bahn die Geschwindigkeit der Reduktion der Dichte am Rand einer Grafik steuert, die auf der Bahn von den Einrichtungen gebildet wurde, derart, dass eine scharfe Definition bereitgestellt wird, wenn sich die Öffnung nahe dem Papier befindet und ein verschwommener, allmählicher Rückgang bereitgestellt wird, wenn sich die Öffnung weiter weg befindet, und wobei das Verfahren das Ein- und Ausschalten der Strömung von Einrichtungen beispielsweise durch Druckluftschwankungen in der Sprühdüse oder durch Blockieren der Düse umfasst.

## Revendications

1. Un dispositif de sécurité comprenant une plaquette holographique plane (21) munie d'un code d'identification, la plaquette contenant un matériau polymère (22), la plaquette possédant des première et deuxième faces principales opposées, chacune d'elles possédant une microstructure (23) agencée de façon à générer une image optiquement variable fournissant le code d'identification sous éclairage, l'image étant optiquement variable sous la forme d'une fonction d'un angle d'éclairage ou d'angle de vision, **caractérisé en ce que** les microstructures sur chacune des première et deuxième faces principales sont agencées de sorte que les images optiquement variables sur chacune des première et deuxième faces principales soient à l'endroit lorsqu'elles sont vues par un observateur (28, 32, 42, 46) lors d'un éclairage à partir du côté de vision respectif.

2. Un dispositif de sécurité selon la Revendication 1 où chaque image optiquement variable est une image sélectionnée parmi une image diffractive et une image holographique et où la microstructure (23) est une structure sélectionnée parmi une structure en relief à surface diffractive métallisée destinée à fournir une réflectivité, une structure diffractive ou holographique de gélatine dichromatée ou photopolymère, une microstructure optique et une structure de génération d'interférence optique.

3. Un dispositif de sécurité selon l'une quelconque des Revendications précédentes comprenant deux stratifiés holographiques (43, 247) liés l'un à l'autre au moyen d'un adhésif permanant adapté (48) destiné à garantir que, à partir de chaque côté de vision, l'image diffractive demeure à l'endroit et correctement orientée vis-à-vis d'un observateur (28, 32, 42, 46).

4. Un dispositif de sécurité selon la Revendication 3 où l'adhésif (48) est choisi de façon à être un adhésif de réticulation, l'adhésif fournissant un revêtement de protection, fournissant ainsi une résistance thermique, à l'eau et chimique améliorée au dispositif.

5. Un dispositif de sécurité selon l'une quelconque des Revendications précédentes enduit avec un adhésif thermoscellable sur une ou les deux faces, l'adhésif étant agencé de façon à fondre et se lier sous l'application de chaleur, de façon à lier ainsi le dispositif de manière permanente à un substrat, le substrat étant du papier.

6. Un dispositif de sécurité selon l'une quelconque des Revendications précédentes comprenant au moins un élément parmi :
un traceur optique visible sous lumière infrarouge ou ultraviolette, et
un traceur magnétique détectable au moyen d'un détecteur de champ magnétique.

7. Un dispositif de sécurité selon l'une quelconque des Revendications précédentes sous la forme d'un disque sensiblement plat (21), où le dispositif possède une dimension plane la plus grande dans la plage d'environ 35 microns à environ 1000 microns, une épaisseur du dispositif étant inférieure à 60% de la dimension plane la plus grande.

8. Un dispositif de sécurité selon l'une quelconque des Revendications précédentes où un relief de surface du dispositif (21) est agencé de façon à rendre le code d'identification visible à un observateur (28, 32, 42, 46) du dispositif (21), où le au moins un indice comprend un caractère alphanumérique et/ou où le code d'identification correspond à un code de lot.

9. Un dispositif de sécurité selon l'une quelconque des Revendications précédentes où l'image optiquement variable visible sur la première face principale est différente de l'image optiquement variable visible sur la deuxième face principale.

10. Un article de sécurité (411) comprenant un dispositif de sécurité (21) selon l'une quelconque des Revendications précédentes, où l'article (411) comprend un élément sélectionné parmi :
un papier de sécurité, où les microparticules sont appliquées au papier de sécurité au cours du processus de fabrication du papier par un processus d'aspersion, de pulvérisation ou d'enduit de pâte liquide sur la bande de papier humide avant séchage, et
un plastique, une feuille et une carte d'identité fabriqué par l'application des dispositifs à des éléments de sécurité tels que bases en plastique pour cartes d'identité ou films PE de feuilles d'estampage à chaud utilisées pour un sur-laminage de préférence à un papier de sécurité.

11. Un article de sécurité (411) selon la Revendication 10 muni d'une pluralité de dispositifs de sécurité (21), où les dispositifs sont fournis de façon à être d'une densité d'un nombre suffisamment bas de façon à fournir une caractéristique de sécurité vérifiable discrètement.

12. Un article de sécurité (411) selon la Revendication 11 où une pluralité de dispositifs (21) sont appliqués à une zone de l'article, fournissant ainsi une caractéristique de sécurité optique visible à un utilisateur (28, 32, 42, 46), éventuellement de façon à former une forme reconnaissable.

13. Un procédé de formation d'un article de sécurité (411) selon la Revendication 11 ou 12 comprenant :
la pulvérisation à partir d'une source d'une pluralité de dispositifs de sécurité (21) selon l'une quelconque des Revendications 1 à 9 au travers d'au moins une ouverture vers une bande de papier humide,
le déplacement d'au moins un élément parmi l'ouverture ou la bande par rapport à la source, et
l'activation et la désactivation de la source de dispositifs, créant ainsi un motifs de dispositifs sur la bande.

14. Un procédé selon la Revendication 13 où la source comprend une tête de pulvérisation et où une distance de l'ouverture à partir à la fois de la tête de pulvérisation et de la bande commande le taux de réduction de la densité au niveau du bord d'un graphisme formé sur la bande par les dispositifs, de sorte qu'une définition nette soit fournie si l'ouverture est proche du papier et une atténuation graduelle floue est fournie si l'ouverture est éloignée, et où le procédé comprend l'activation et la désactivation du flux de dispositifs, par exemple par des variations de la pression de l'air dans la buse de pulvérisation ou par une ouverture de blocage.
